# EUROPEAN PATENT SPECIFICATION

(11) **EP 1 642 409 B1**
(45) Date of publication and mention of the grant of the patent: **13.08.2008**
(21) Application number: 03733808.4
(22) Date of filing: 26.06.2003
(51) Int. Cl.: H04J 11/00

(54) **METHOD AND ARRANGEMENT IN A COMMUNICATION SYSTEM**
VERFAHREN UND ANORDNUNG IN EINEM KOMMUNIKATIONSSYSTEM
PROCEDE ET DISPOSITIF D'UN SYSTEME DE COMMUNICATION

(43) Date of publication of application: 05.04.2006
(73) Proprietor: TELEFONAKTIEBOLAGET LM ERICSSON (publ), 164 83 Stockholm (SE)
(72) Inventor: LINDSKOG, Jan, S-435 43 Pixbo (SE); RYDNELL, Gunnar, S-421 59 Västra Frölunda (SE)
(74) Representative: Kühn, Friedrich Heinrich
(86) International application number: PCT/SE2003/001114
(87) International publication number: WO 2004/114565

(56) References cited:
- WO-A1-03/047129
- DE-A1- 19 835 643
- TSENG Y.-C. ET AL.: 'Code placement and replacement strategies for wideband CDMA OVSF code tree management' IEEE TRANSACTIONS ON MOBILE COMPUTING vol. 1, no. 4, October 2002 - December 2002, pages 293 - 302, XP001171671 & DATABASE INSPEC [Online] Database accession no. 7602955

## Description

### TECHNICAL FIELD OF THE INVENTION

The invention relates to a method of resource allocation in a communication system as well as an apparatus for resource allocation and a radio network controller and a radio access network including such an apparatus for resource allocation. More in particular, the invention relates to allocation of channel resources in the communication system.

### DESCRIPTION OF RELATED ART

Radio resource management (RRM) is the function of a cellular radio communication system that is responsible for allocating radio channels when establishing calls or data transactions involving specific mobile stations. RRM is typically located in a Radio network node, such as the BSC in GSM or the RNC in a 3GPP UMTS system (often referred to as a WCDMA system). In GSM the channel consists of a time slot, while in 3GPP WCDMA the channel consists of a spreading code. In GSM the channels are basically of fixed bandwidth, a timeslot corresponds to a 16 kbps channel. In WCDMA, there are channels of different bandwidths from 12.2 kbps up to 2 Mbps. When a mobile station operating in a WCDMA system makes a request for a channel it must specify a required bandwidth of the channel. There are channels of different bandwidths, and the length of the spreading code, the OVSF code, determines the bandwidth. OVSF stands for Orthogonal Variable Spreading Factor. The available OVSFs form a Code Tree of codes of different lengths. The higher on the tree, the shorter the code is and the higher bit rate does the code provide. Higher bandwidth codes are of course of higher value. When a code is allocated, other codes above and below on that branch are blocked and can not be allocated.

The RRM allocates channels according to a channel (code) allocation algorithm, i.e. a rule for allocating channels. The available codes are the valuable resource of the system. It is important that the algorithm works in an optimised way, in order to optimise the capacity of the system. The optimisation principle of code allocation in WCDMA, is to keep as much high value codes as possible free. This is achieved in current WCDMA systems, by chosing codes next to another code of the same rate that is already allocated rather than taking one that is on a branch where no codes are allocated.

The published international patent application WO 99/12284 discloses methods for assigning spreading codes to forward-link connections with variable bit-rate in DS-CDMA communication systems. According to one embodiment disclosed in WO 99/12284, spreading codes are assigned to forward-link connections from a first set of orthogonal codes as long as there are codes available in the first set. When no more codes are available in the first set, spreading codes from a second set of orthogonal spreading codes which are non-orthogonal to the spreading codes in the first set are assigned to the forward-link connections.

"Dynamic Code Assignment Improves Channel Utilization for Bursty Traffic in Third-Generation Wireless Networks" by Carl E. Fossa, Jr and Nathanial J. Davis IV, discloses a dynamic OVSF code assignment algorithm for sharing bandwith between bursty traffic sources with different QoS requirements wherein the spreading code and bandwith assigned to high QoS traffic is dynamically changed and best effort traffic is allowed to utilize an orthogonal spreading code when the high QoS traffic is not transmitting at peak data rata.

"Signalling delay of code allocation strategies" by Goria et al discusses the use of Dynamic Code Assignment (DCA) schemes of OVSF codes in WCDMA systems, wherein OVSF codes are reallocated, i.e. ongoing calls are forced to change codes ("code handover"), in order to prevent code blocking.

The prior art algorithms for allocating OVSF codes in WCDMA systems are based on allocating OVSF codes which momentarily optimises the resource allocation at the time the new channel is needed. However, the resource situation is dynamic, new channels are added and old channels are released. Since a specific code allocation will not only block the allocated code, but also other codes above and below in the OVSF code tree, there is a possibility that two alternative allocations that look similar at the moment, will just a few moments later, when other codes are released, look very different from a resource optimisation perspective. Thus, the current algorithm can make code allocation decisions which, when viewed over a period of time, are not optimal with respect to capacity utilization.

WO 03/047129 discloses allocation of OVSF codes wherein when a code of level k=i is requested for a connection, a free code of the ith level whose subtree structure from the root of the code tree has a largest combined weight The combined weight is a sum of weights for all codes that are allocated in the subtree. In certain modes, the weights can be values related e.g. to duration of allocation. Such weights can be statistically derived e.g. based on service type or on individual user behavior.

DE 198 35 643 discloses a method for allocating channels, wherein CDMA codes form the channels for communication links.

### SUMMARY OF THE INVENTION

The problem dealt with by the present invention is that of providing an alternative way of allocating channel resources in a radio communication system.

The problem is solved by a method according to claim 1 and an apparatus according to claim 11.

A general object of the invention is to provide an alternative way of allocating channel resources in radio communication systems.

A further object is to provide an improved way of allocating channel resources in radio communication systems where channel resource are hierarchically organized such that allocation of a certain channel resource also affects the availability for allocation of other channel resources.

Yet another object is to provide an improved way of allocating channel resources in a CDMA based communication system, such as UMTS or CDMA2000, which reduces the risk for code blocking arising in the downlink direction.

The invention will now be described in more detail with reference to exemplary embodiments thereof and also with reference to the accompanying drawings.

### BRIEF DESCRIPTION OF THE DRAWINGS

Fig. 1 is a schematic view of an exemplary communication system in which the present invention may be advantageously employed.
Fig. 2 is a chart illustrating a OVSF code tree.
Fig. 3 is a flow diagram illustrating a basic method according to the invention for channel resource allocation.
Fig. 4A-B are flow diagrams illustrating a method for channel resource allocation according to a first exemplary embodiment of the invention.
Fig. 5 is a diagram illustrating a first exemplary data structure for representing the OVSF code tree and supporting the method for resource allocation illustrated in Fig. 4A-B.

### DETAILED DESCRIPTION OF THE EMBODIMENT

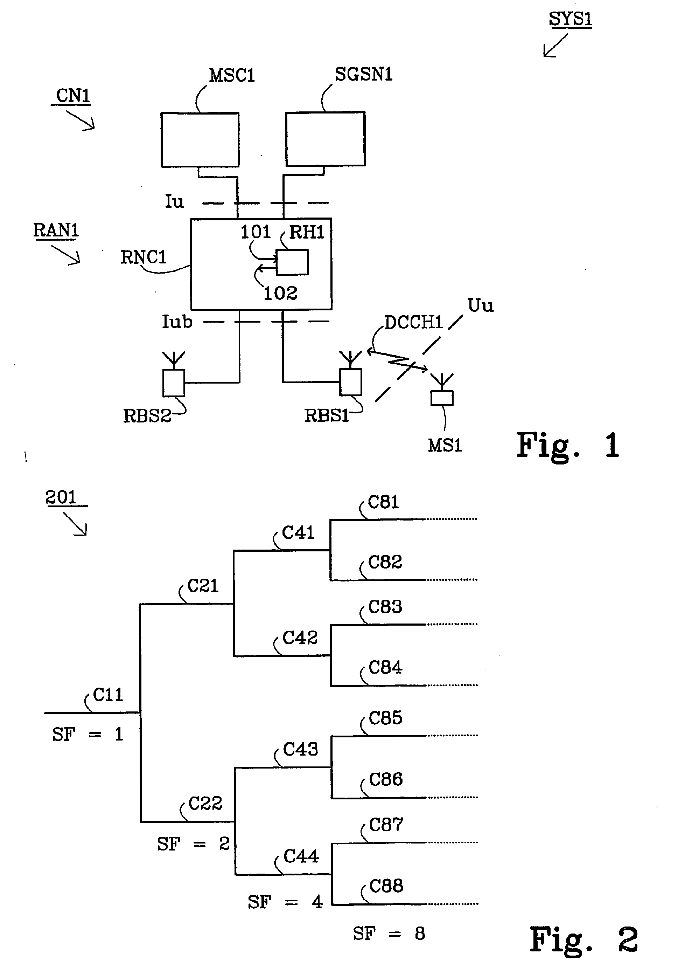

Fig. 1 illustrates a non-limiting example of a communication system SYS1 in which the present invention may be employed. The exemplary communication system SYS1 illustrated in Fig. 1 is a 3^{rd} Generation Partnership Project (3GPP) Universal Mobile Telecommunication System (UMTS). The communication system SYS1 includes a core network CN1, a UMTS Terrestrial Radio Access Network (UTRAN) RAN1 and User Equipment (UE), alternatively referred to as mobile stations (MS).

The core network CN1 includes a Mobile services Switching Center (MSC) node MSC1 that provides circuit-switched services and a General Packet Radio Service (GPRS) node SGSN1, sometimes referred to as a serving GPRS support node (SGSN), which is tailored to provide packet-switched type services.

Each of the core network nodes MSC1 and SGSN1 connects to the the radio access network RAN1, over a radio access network interface referred to as the Iu interface. The radio access network RAN1 includes one or more radio network controllers (RNCs). For sake of simplicity, the radio access network RAN1 of Fig. 1 is shown with only one radio network controller node RNC1. Each radio network controller is connected to and controls a plurality of radio base stations (RBSs). For example, and again for sake of simplicity, Fig. 1 only illustrates a first radio base station node RBS1 and a second radio base station node RBS2 connected to the radio network controller node RNC1. The interface between the radio network controller RNC1 and the base stations RBS1 and RBS2 is referred to as the Iub interface.

Mobile stations, such as mobile station MS1 shown in Fig. 1, communicate with one or more radio base stations RBS1-RBS2 over a radio or air interface referred to as the Uu interface. Communication in the direction from the radio base stations RBS1-RBS2 to the mobile stations is referred to as occuring in the downlink (or forward) direction while communication in the opposite direction, i.e. from the mobile stations to the radio base stations RBS1-RBS2 is referred to as occuring in the uplink (or reverse) direction.

Each of the radio interface Uu, the Iu interface and the Iub interface are shown by dashed lines in Fig. 1.

Information that is transmitted in the downlink direction is spread to the chip rate (3.84 Mcps) using channelization codes and then scrambled by a cell-specific scrambling code while information that is transmitted in the uplink direction are spread to the chip rate using channelization codes and then scrambled by a mobile station specific scrambling code.

As is well known to a person skilled in the art, the channelization codes used for spreading are Orthogonal Variable Spreading Factor (OVSF) codes, which basically are orthogonal Walsh codes of different length.

The OVSF codes preserve orthogonality between downlink physical channels of different rates and spreading factors (SF) and can be organized into a tree-structure as illustrated in Fig. 2.

The OVSF codes C11-C88 at different levels in the tree 201 are of different lenghts providing different spreading factor (the spreading factor defines the ratio between the output and input data rates of the spreading process) and bandwith. Codes higher up in the tree are shorter, have lower spreading factor and provide higher bandwith than codes at levels further down in the tree structure.

A specific code in the code tree can be used, i.e. allocated, only if no other code on the path from the top/root of the tree or in the sub-tree below the specific code is used with the same scrambling code (preferrably a single downlink scrambling code is used in a cell, but multiple downlink scrambling codes may also be used). As an example, if code C41 (see Fig. 2) is allocated for providing a physical channel, codes C21 and C11, i.e the ancestor codes of code C41, as well as codes C81 and C82, i.e. the descendant codes in the subtree below code 41, would become unavailable for allocation for as long as code C41 remains allocated. The allocation of code C41 would not prevent the other codes of the tree, i.e. codes C22 and C42 and their descendant codes, from being allocated to provide other channels.

Due to the fact that there is a limited number of OVSF codes available and the allocation of a certain code causes its ancestor and descendant codes to become unavailable for allocation, the channel (code) allocation algorithm for allocating downlink chanellization codes in the communication system SYS1 becomes crucial in order to optimise the capacity of the system. Codes higher up in the tree, i.e. higher bandwith codes of lower spreading factor, are of course of higher value than codes further down in the tree. The optimization principle of channel allocation in WCDMA, is to keep as much high value codes as possible free.

In present WCDMA systems, this is achieved by selecting, for allocation, codes next to another code of the same rate that is already allocated rather than selecting one that is located on a branch where no codes are allocated, i.e. a code which is available for allocation but whose parent code already is unavailable for allocation is preferred over a code which is available for allocation and whose parent code also is available for allocation. As an example scenario (see Fig. 2) illustrating this algorithm for code allocation, consider a situation where codes C88 and C86 are the only codes that currently are allocated in the code tree 201 when a request for allocating a code of spreading factor 8 is received. It is the task of the code allocation algorithm to allocate the optimal code of spreading factor 8 to serve the received request. Codes C87, C85 and C81-C84 are available for allocation. However, since the parent codes of C87 and C85, i.e. codes C44 and C43 respectively, are currently not available for allocation due to the codes C88 and C86 being in use, while the parent codes of codes C81-C84, i.e. codes C41 and C42, are available for allocation, codes C87 and C85 are the preferred candidates for allocation. Hence, either code C87 or C85 is allocated in response to the received channel request. This algorithm, makes no distinction between which one of codes C87 or C85 would be better suited for allocation, and maybe code C85 is selected over code C87 by random choice.

The prior art channel (code) allocation algorithm described above is based on momentarily optimising the resource allocation at the time the new channel is needed. However, the resource situation is dynamic, new channels are added and old channels are released. Since a specific code allocation will not only block the allocated code, but also other codes above and below in the code tree, there is a possibility that two alternative allocations that look similar at the moment, will just a few moments later, when other codes are released, look very different from a resource optimisation perspective. Thus, the current algorithm can make code allocation decisions which, when viewed over a period of time, are not optimal with respect to capacity utilization.

The present invention provides an improved way of allocating channel resources in a communication system which adresses the above illustrated problem.

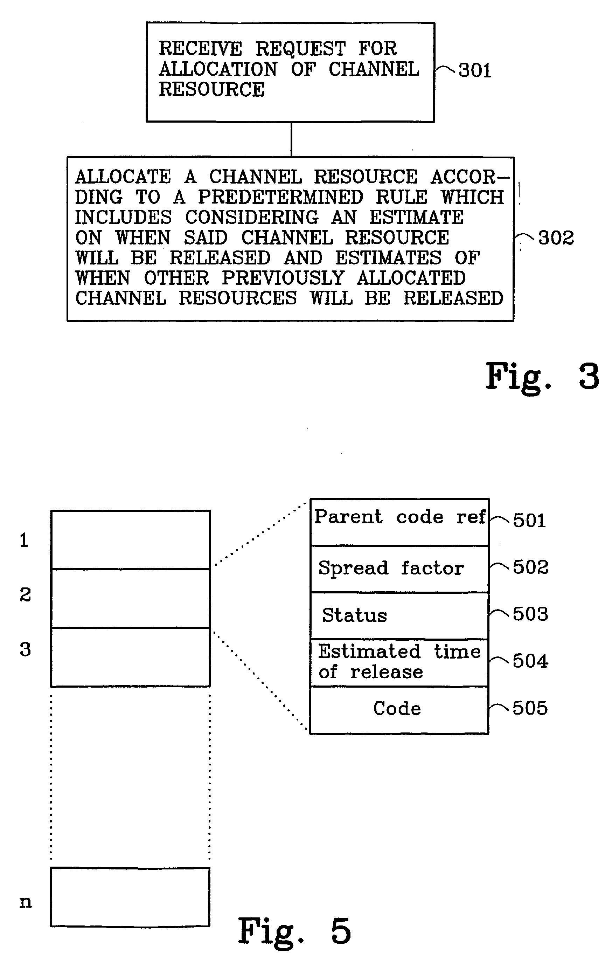

Fig. 3 illustrates a basic method according to the invention for allocating channel resources in a communication system.

At step 301, a request for allocation of a channel resource, e.g. a spreading code, is received.

In response, a specific channel resource is allocated at step 302 according to a predetermined rule which includes considering an estimate of when said specific channel resource will be released and estimates of when other previously allocated channel resources will be released.

The basic method can be applied in a variety of different communication systems utilizing different kinds of channel resources. It is however especially useful to apply the invention in systems, e.g. Code Division Multiple Access (CDMA) based systems such as WCDMA, where the channel resources are hierarchically organized, including higher level channel resources and associated lower level channel resources, in which the allocation of a lower level channel resource causes an associated higher level channel resource to become unavailable for allocation.

As an example, in Fig. 2 OVSF codes C41-C44 are higher level channel resources associated with lower level channel resources in the form of OVSF codes C81-C88. In this particular example, each higher level channel resource is associated with two lower level channel resources, e.g. higher level OVSF code C41 is associated with the two lower level OVSF codes C81 and C82. Further, a higher level channel resource is only available for allocation if both its associated lower level channel resources are available for allocation, e.g. allocation of either one or both of the lower level OVSF codes C81 and C82 causes higher level OVSF code C41 to become unavailable for allocation.

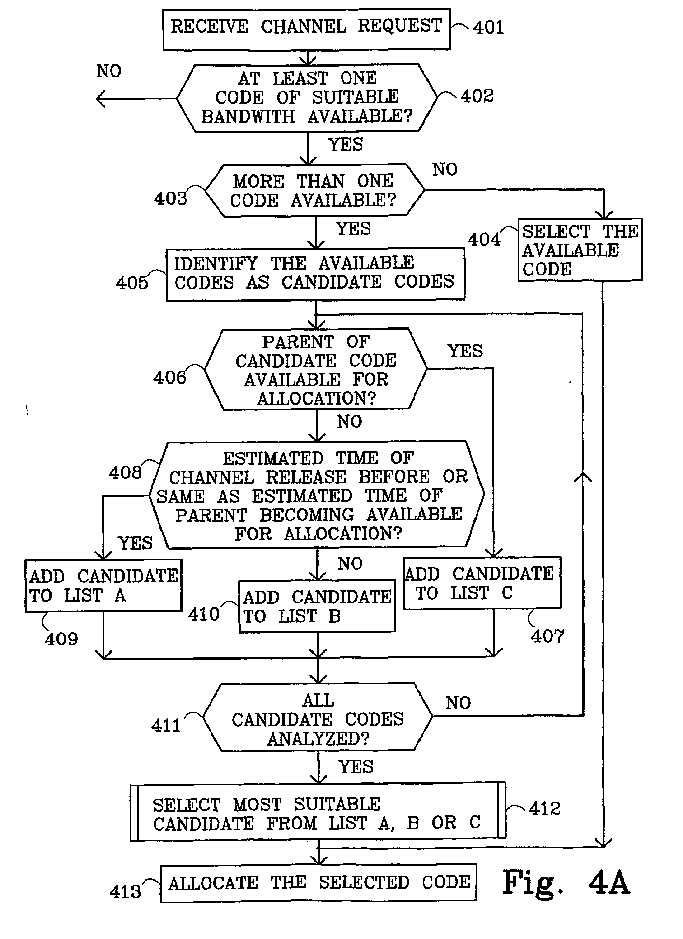

Fig. 4A-B illustrate a first exemplary embodiment of a method for allocating channel resources employed in the communication system SYS1 of Fig. 1. Allocation of channel resources in the form of OVSF codes is handled by a channel resource handler RH1 (see Fig. 1) in the radio network controller node RNC1. The channel resource handler RH1 is typically implemented as software executing on a processor in the radio network controller node RNC1. The channel resource handler RH1 allocates OVSF codes 102 in response to received channel requests 101.

At step 401 of Fig. 4A, a request for a channel resource is received by the resource handler RH1. The request includes an estimate of for how long the channel resource will be needed. In this exemplary embodiment of the invention, the application, e.g. a streaming multimedia application providing a video on demand service, provides a duration parameter when establishing a communication session with a certain mobile station and also QoS parameters indicating the required bandwith. The resource handler RH1 translates the provided duration parameter into an estimate of when the requested channel resource will be released based on the current time.

At step 402 a check is made as to whether there is at least one OVSF code of suitable bandwith available for allocation. If no available code is found (an alternative NO at step 402), the resource handler RH1 reports that no suitable OVSF code is available for serving the received request and the request for establishing a communication session is either refused or bandwith renegotiation is initiated.

If there is at least one OVSF code of suitable bandwith available for allocation (an alternative YES at step 402), a check is made at step 403 as to whether there is more than one such code available for allocation. If there is only one code of suitable bandwith available for allocation (an alternative NO at step 403), said code is selected as the only available candidate code for allocation at step 404 and allocated at step 413 in response to the received channel request.

If there are more than one OVSF code of suitable bandwith available for allocation (an alternative YES at step 403), all the available OVSF codes of suitable bandwith are identified as "candidate codes" at step 405 and a first code among said candidate codes is selected for further analysis.

At step 406 analysis of the selected candidate code is initiated by considering whether the parent code of the candidate code is available for allocation. If the parent code is available for allocation (an alternative YES at step 406), i.e. all descendant codes of the parent code are available for allocation, the candidate code is added to list C at step 407. If the parent code is not available for allocation (an alternative NO at step 406), implying that the sibling code (the code having the same parent code as the candidate code) of the candidate code is also not available for allocation, analysis of the candidate code proceeds at step 408.

At step 408 the estimated time of release for the requested channel resource is compared to an estimate for when the parent code of the candidate code will become available for allocation. If the estimated time of release for the requested channel resource is before or the same as the estimated time for when the parent code will become available for allocation (an alternative YES at step 408), the candidate code is added to list A at step 409. Otherwise (an alternative NO at step 408), i.e. if the estimated time of release of the requested channel resource is after the estimated time for when the parent code will become available, the candidate code is added to list B.

After either one of steps 407, 409 and 410 processing continues at step 411 , where a check is made whether all candidate codes have been analysed. If there remain candidate codes that need to be analyzed (an alternative NO at step 411), processing continues at step 406 where analysis of one of the remaining candidate codes is initiated. If all candidate codes have been analyzed (an alternative YES at step 411), all candidate codes will have been entered on one of lists A, B and C and the candidate code considered to be most suitable for allocation is selected at step 412 from said lists. The selected candidate code is allocated at step 413 in response to the received channel request.

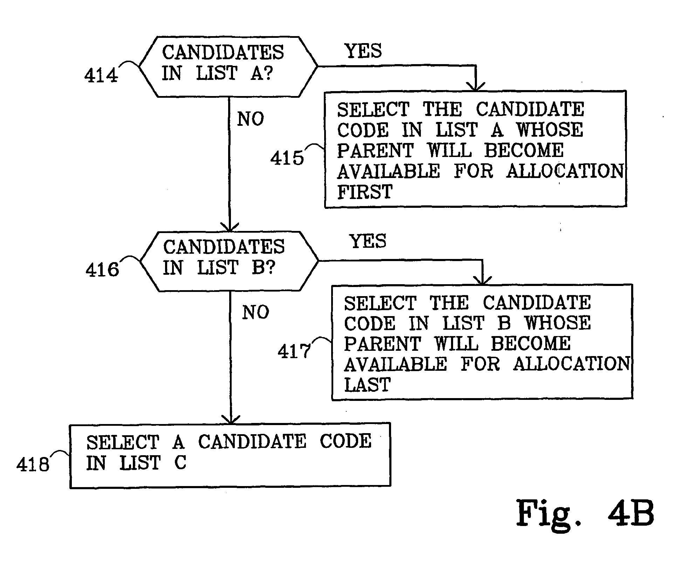

Step 412 is further elaborated in Fig. 4B. Upon entering step 412, list A and B will contain those candidates whose parent codes are already unavailable for allocation. List A will contain candidate codes whose parents are estimated to become available for allocation after (or at the same time as) the estimated release of the requested channel resource while list B will contain candidate codes whose parents are estimated to become available for allocation before the estimated release of the requested channel resource. List C will contain those candidates whose parent codes are currently available for allocation.

At step 414 a check is made whether there are any candidate codes in list A. If list A includes at least one candidate code (an alternative YES at step 414), the candidate code on list A whose parent code will first become available for allocation is selected as most suitable for allocation. Selecting a candidate code from list A for allocation implies that the estimated time of the correspoding parent code becoming available for allocation will not be postponed while selecting the candidate code whose parent will first become available implies that allocation of similar duration is packed together, which is good since then channel resources will become available for allocation in "chunks", freeing up larger areas of the code tree at once.

If list A is empty (an alternative NO) at step 414, a check is made at step 416 whether there are any candidate codes in List B. If list B includes at least one candidate code (an alternative YES at step 416), the candidate code on list B whose parent code will last become available for allocation is selected as most suitable for allocation. Selecting a candidate code from list B for allocation implies that the estimated time of the correspoding parent code becoming available for allocation will be postponed somewhat, while selecting the candidate code whose parent will last become available minimizes said postponement.

Finally, if list B also is empty (an alternative NO at step 416), a candidate code is selected from list C. Selecting a candidate code from list C for allocation implies that the corresponding parent code will become unavailable for allocation.

Since selecting a candidate code for allocation from list A or B involves considering how the estimated time of release of the requested channel resource relates to the estimated time of parent codes of said candidate codes becoming available for allocation, the candidate codes are preferrably sorted upon entry on list A and B respectively based on the estimated time of the respective parent code becoming available for allocation. Preferrably lists A and B are sorted such that upon entering step 412, the first candidate code on list A and list B respectively are the candidate codes that would be selected from said lists, i.e. the first candidate code on list A is the candidate code whose parent code is estimated to be the first parent code that becomes available after, or preferrably at the same time as, the requested channel resource is released, while the first candidate code on list B is the candidate code whose parent code will be the last parent code that becomes available before release of the requested channel resource.

Lists A, B and C are used to organize the available channel resources, i.e. candidate codes, into different subsets in order to manage the selection process.

On a first level, the candidate codes are divided into a first subset including candidate codes (lower level channel resources) associated with parent codes (higher level channel resources) currently available for allocation, and a second subset including candidate codes associated with parent codes currently unavailable for allocation. The first subset of candidate codes is represented by list C while the second subset of candidate codes is represented by the union of lists A and B.

The second subset of candidate codes is further divided into a third subset including candidate codes associated with parent codes which are estimated to become available for allocation at the same time or after the estimated release of the requested channel resource and a fourth subset including candidated codes associated with parent codes which are estimated to become available for allocation before the estimated release of the requested channel resource. The third subset of candidate codes is represented by list A while the fourth subset of candidate codes is represented by list B.

Thus, according to the rule for allocating channel resources (OVSF codes) illustrated above, allocation of a candidate code whose parent code already is unavailable for allocation is preferred over allocating a code whose parent is available for allocation. Of those candidate codes whose parent codes already are unavailable for allocation, allocation of a code whose parent code is estimated to become available for allocation after or at the same time as the estimated release of the requested channel resource is preferred over allocating a code whose parent is estimated to be released before the estimated release of the requested channel resource. Finally, if after considering the criterias above more than one candidate code appears suitable for selection, the code whose parent is estimated to become available for allocation closest in time to the estimated release of the requested channel resource is selected for allocation.

Fig. 5 illustrates an exemplary data structure for representing the OVSF code tree of Fig. 2. The data strucuture comprises an array of records representing the OVSF codes. The records have index 1 to n, where n is the total number of OVSF codes in the OVSF code tree. Each record, representing a single OVSF code, includes the following fields:
Parent code ref 501:
   The index of the codes parent code. The code at the root of the tree has no parent code, which is represented by a reserved nil-value (e.g. zero).
Spreading factor 502:
   The spreading factor of the OVSF code
Status 503:
   Indicates whether the OVSF code is allocated/not allocated.
Estimated time of release 504:
   Indicates the estimated time of release when the code is allocated.
Code 505:
   The OVSF code number represented by the record.

Each time a OVSF code needs to be allocated, the array of records illustrated in Fig. 5 is traversed in search for candidate codes available for allocation, and the index of available candidate codes, together with estimates for when the corresponding parent codes will become available for allocation, are registered in temporary data structures representing lists A, B and C (not shown in Fig. 5). The estimate for when a parent code of a candidate code will become available for allocation corresponds to the longest time any one of the parent codes descendant codes is estimated to remain allocated.

Apart from the above disclosed exemplary first embodiment of the invention, there are several ways of providing rearrangements, modifications and substitutions of the first embodiment resulting in additional embodiments of the invention.

There are many possible alternative ways of providing estimates of how long channel resources are needed. According to the exemplary first embodiment of the invention disclosed above, the estimated time of release of channel resources is based on a duration parameter provide by an application when establishing a communication session with a certain mobile station. Alternatively an application could indicate an amount of data to be transferred (e.g. the size of a picture, MMS message or file to be tranferred), allowing the estimated time of release of channel resources to be determined based on said amount of data and the available (or by the application requested) bandwith. Yet other alternatives would be to provide said estimates based on statistical data on how long the channel resources are required by different applications, users and/or communication sessions established with a certain set of QoS-parameters.

Different rules can be defined for how channel resources are allocated while considering the estimated time of release of the requested channel resource and previosly allocated channel resources. Thus, one example of an alternative to the rule applied in the first exemplary embodiment disclosed above, would be to divide the available candidate codes into candidate codes associated with parent codes which are curently available for allocation and candidate codes associated with parent codes which are currently unavailable for allocation, and then, among the candidate codes in the latter subset (i.e. available candidate codes associated with parent codes currently not available for allocation) select a candidate code associated with a parent code whose estimated time of becoming available for allocation is closest to the estimated time of release of the requested channel resource (regardless of whether said parent code will become available before or after said estimated release of the requested channel resource).

An allocated channel resource (e.g. an OVSF code) may be released before an established communication session (e.g. a multimedia session) with a particular mobile station is terminated, thus requiring allocation of a new channel resource for supporting the remaining part of the communication session. This may occur e.g. as a result of handover from a first cell to a second cell, requiring allocation of a new channel resource in the second cell and release of the channel resource originally allocated in the first cell (note that when using soft handover, the channel resource in the first cell may be retained at least for a while). It may also occur e.g. as a result of code reallocation in a cell in order to achieve better resource usage in the cell. An estimate for when the new channel resource will be released may then be based on the remaining time until the estimated release of the originally allocated channel resource. Allocation of the new channel resource may then proceed according to the invention based on said estimate for when the new channel resource will be released.

It is also possible to allow estimates for when channel resources will become available to be subsequently updated (extended or shortened).

Even though the invention in its first exemplary embodiment has been applied in a 3GPP UMTS system, the invention may of course be applied in other radio communication systems as well and in particular in communciation systems where channel resource are hierarchically organized such that allocation of a certain channel resource also affects the availability for allocation of other channel resources. Another example of a system having hierarchically organized channel resources is CDMA2000 which similar to UMTS uses channel resources in the form of different length Walsh codes. Yet another example of a system utilizing hierarchically organized resources is TIA/EIA-136 (DAMPS). By utilizing the present invention in a TIA/EIA-136 system, where channel resources are provided in the form of carrier frequencies and time slots on said carrier frequencies, it is possible to implement an Adaptive Channel Allocation (ACA) scheme wherein the number of carrier frequencies in active use for communication in a cell can be minimized by packing allocations of similar duration on the same carrier frequency.

### ABBREVIATIONS

- ACA: Adaptive Channel Allocation
- BSC: Base Station Controller
- CDMA Code: Division Multiple Access
- DAMPS: Digital Advanced Mobile Phone System
- EIA: Electrical Industries Associates
- GPRS: General Packet Radio Service
- GSM: Global System for Mobile communication
- MS: Mobile Station
- MSC: Mobile services Switching Centre
- OVSF: Orthogonal Variable Spreading Factor
- QoS: Quality of Service
- RBS: Radio Base Station
- RNC: Radio Network Controller
- RRM: Radio resource Management
- SF: Spreading Factor
- TIA: Telecommunications Industry Association
- SGSN: Serving GPRS Support Node
- UE: User Equipment
- UMTS: Universal Mobile Telecommunication System
- UTRAN: UMTS Terrestrial Radio Access Network
- WCDMA: Wideband CDMA
- 3GPP: 3^{rd} Generation Partnership Project

## Claims

1. A method for allocating channel resources in a radio communication system (SYS1), the method comprising:
receiving (301) a request for allocation of a channel resource;
allocating (302) a specific channel resource (C11-C88) according to a predetermined rule which includes considering an estimate of when said specific channel resource will be released and estimates of when other previously allocated channel resources will be released.

2. A method according to claim 1, wherein said radio communication system is a Code Division Multiple Access based system and said channel resources are spreading codes.

3. A method according to claim 2, wherein said spreading codes are Orthogonal Variable Spreading Factor codes (C11-C88).

4. A method according to any one of claims 2-3, wherein said channel resources include at least two higher level channel resources (C41, C42), said higher level channel resources being associated with at least two lower level channel resources each (C81-C82, C83-C84) such that a higher level channel resource (C41) is available for allocation only when all lower level channel resources (C81-C82) associated with said higher level channel resource also are available for allocation, said lower level channel resources having higher spreading factors than said higher level channel resources.

5. A method according to claim 1, wherein said channel resources are hierarchically organized and include at least two higher level channel resources, said higher level channel resources being associated with at least two lower level channel resources each such that a higher level channel resource is available for allocation only when all lower level channel resources associated with said higher level channel resource also are available for allocation.

6. A method according to any one of claims 4-5, wherein according to said predetermined rule,
if at least two lower level channel resources are available candidates for allocating as said specific channel resource,
and if said available candidates include both a first and a second subset of lower level channel resources, wherein said first and second subsets include at least one lower level channel resource each, and each lower level channel resource in said first subset is associated with a higher level channel resource which is currently available for allocation while each lower level channel resource in said second subset is associated with a higher level channel resource which is currently not available for allocation,
a lower level channel resource in said second subset is selected as said specific channel resource.

7. A method according to claim 6, wherein according to said predetermined rule, if said second subset includes at least two lower level channel resources, said predetermined rule includes comparing estimates for when the higher level channel resources associated with the lower level channel resources in said second subset will become available for allocation with the estimate of when said specific channel resource will be released.

8. A method according to claim 7, wherein according to said predetermined rule, if said second subset includes both a third and a fourth subset, wherein said third and fourth subsets include at least one lower level channel resource each, and each lower level channel resource in said third subset is associated with a higher level channel resource which is estimated to become available at the same time or after the estimated release of said specific channel resource while each lower level channel resource in said fourth subset is associated with a higher level channel resource which is estimated to become available before the estimated release of said specific channel resource,
a lower level channel resource in said third subset is selected as said specific channel resource.

9. A method according to claim 8, wherein according to said predetermined rule, if said third subset includes at least two lower level channel resources,
a lower level channel resource in said third subset which is associated with a higher level channel resource whose estimated time of becoming available for allocation is closest to the estimated time of release of said specific channel resource, is selected as said specific channel resource.

10. A method according to claim 7, wherein according to said predetermined rule, a lower level channel resource in said second subset which is associated with a higher level channel resource whose estimated time of becoming available for allocation is closest to the estimated time of release of said specific channel resource, is selected as said specific channel resource.

11. An apparatus (RH1) for allocating channel resources in a radio communication system, said apparatus comprising:
electronic circuitry for receiving a request for allocation of a channel resource;
electronic circuitry for allocating a first channel resource according to a predetermined rule which includes considering an estimate of when said first channel resource will be released and estimates of when other previously allocated channel resources will be released.

12. An apparatus according to claim 11, wherein said radio communication system is a Code Division Multiple Access based system and said channel resources are spreading codes.

13. An apparatus according to claim 12, wherein said spreading codes are Orthogonal Variable Spreading Factor codes (C11-C88).

14. An apparatus according to any one of claims 12-13, wherein said channel resources include at least two higher level channel resources (C41, C42), said higher level channel resources being associated with at least two lower level channel resources each (C81-C82, C83-C84) such that a higher level channel resource (C41) is available for allocation only when all lower level channel resources (C81-C82) associated with said higher level channel resource also are available for allocation, said lower level channel resources having higher spreading factors than said higher level channel resources.

15. An apparatus according to claim 11, wherein said channel resources are hierarchically organized and include at least two higher level channel resources, said higher level channel resources being associated with at least two lower level channel resources each such that a higher level channel resource is available for allocation only when all lower level channel resources associated with said higher level channel resource also are available for allocation.

16. An apparatus according to any one of claims 14-15, wherein according to said predetermined rule,
if at least two lower level channel resources are available candidates for allocating as said specific channel resource,
and if said available candidates include both a first and a second subset of lower level channel resources, wherein said first and second subsets include at least one lower level channel resource each, and each lower level channel resource in said first subset is associated with a higher level channel resource which is currently available for allocation while each lower level channel resource in said second subset is associated with a higher level channel resource which is currently not available for allocation,
a lower level channel resource in said second subset is selected as said specific channel resource.

17. An apparatus according to claim 16, wherein according to said predetermined rule, if said second subset includes at least two lower level channel resources, said predetermined rule includes comparing estimates for when the higher level channel resources associated with the lower level channel resources in said second subset will become available for allocation with the estimate of when said specific channel resource will be released.

18. An apparatus according to claim 17, wherein according to said predetermined rule, if said second subset includes both a third and a fourth subset, wherein said third and fourth subsets include at least one lower level channel resource each, and each lower level channel resource in said third subset is associated with a higher level channel resource which is estimated to become available at the same time or after the estimated release of said specific channel resource while each lower level channel resource in said fourth subset is associated with a higher level channel resource which is estimated to become available before the estimated release of said specific channel resource,
a lower level channel resource in said third subset is selected as said specific channel resource.

19. An apparatus according to claim 18, wherein according to said predetermined rule, if said third subset includes at least two lower level channel resources,
a lower level channel resource in said third subset which is associated with a higher level channel resource whose estimated time of becoming available for allocation is closest to the estimated time of release of said specific channel resource, is selected as said specific channel resource.

20. An apparatus according to claim 17, wherein according to said predetermined rule, a lower level channel resource in said second subset which is associated with a higher level channel resource whose estimated time of becoming available for allocation is closest to the estimated time of release of said specific channel resource, is selected as said specific channel resource.

21. A radio network controller node for use in a radio communication system including an apparatus according to any one of claims 11-20.

22. A radio access network including an apparatus according to any one of claims 11-20.

## Patentansprüche

1. Verfahren zur Zuteilung von Kanalressourcen in einem Funkkommunikationssystem (SYS1), wobei das Verfahren umfaßt:
Empfangen (301) einer Anforderung einer Zuteilung einer Kanalressource;
Zuteilen (302) einer spezifischen Kanalressource (C11-C88) gemäß einer vorbestimmten Regel, welche aufweist: Berücksichtigen eines Schätzwerts dafür, wann die spezifische Kanalressource freigegeben wird, und von Schätzwerten dafür, wann andere vorher zugeteilte Kanalressourcen freigegeben werden.

2. Verfahren nach Anspruch 1, wobei das Funkkommunikationssystem ein auf Codemultiplex-Mehrfachzugriff beruhendes System ist und die Kanalressourcen Spreizcodes sind.

3. Verfahren nach Anspruch 2, wobei die Spreizcodes orthogonale veränderliche Spreizfaktorcodes (C11-C88) sind.

4. Verfahren nach einem der Ansprüche 2 bis 3, wobei die Kanalressourcen mindestens zwei Kanalressourcen höherer Ebene (C41, C42) aufweisen, wobei den Kanalressourcen höherer Ebene jeweils mindestens zwei Kanalressourcen niederer Ebene (C81-C82, C83-C84) so zugeordnet sind, daß eine Kanalressource höherer Ebene (C41) nur zur Zuteilung verfügbar ist, wenn alle Kanalressourcen niederer Ebene (C81-C82), die der Kanalressource höherer Ebene zugeordnet sind, ebenfalls zur Zuteilung verfügbar sind, wobei die Kanalressourcen niederer Ebene höhere Spreizfaktoren als die Kanalressourcen höherer Ebene haben.

5. Verfahren nach Anspruch 1, wobei die Kanalressourcen hierarchisch organisiert sind und mindestens zwei Kanalressourcen höherer Ebene aufweisen, wobei den Kanalressourcen höherer Ebene jeweils mindestens zwei Kanalressourcen niederer Ebene so zugeordnet sind, daß eine Kanalressource höherer Ebene nur zur Zuteilung verfügbar ist, wenn alle Kanalressourcen niederer Ebene, die der Kanalressource höherer Ebene zugeordnet sind, ebenfalls zur Zuteilung verfügbar sind.

6. Verfahren nach einem der Ansprüche 4 bis 5, wobei gemäß der vorbestimmten Regel,
wenn mindestens zwei Kanalressourcen niederer Ebene verfügbare Kandidaten zur Zuteilung als die spezifische Kanalressource sind
und wenn die verfügbaren Kandidaten sowohl eine erste als auch eine zweite Teilmenge von Kanalressourcen niederer Ebene aufweisen, wobei die erste und die zweite Teilmenge jeweils mindestens eine Kanalressource niederer Ebene aufweisen und jede Kanalressource niederer Ebene in der ersten Teilmenge einer Kanalressource höherer Ebene zugeordnet ist, die gegenwärtig zur Zuteilung verfügbar ist, während jede Kanalressource niederer Ebene in der zweiten Teilmenge einer Kanalressource höherer Ebene zugeordnet ist, die gegenwärtig nicht zur Zuteilung verfügbar ist,
eine Kanalressource niederer Ebene in der zweiten Teilmenge als die spezifische Kanalressource ausgewählt wird.

7. Verfahren nach Anspruch 6, wobei gemäß der vorbestimmten Regel, wenn die zweite Teilmenge mindestens zwei Kanalressourcen niederer Ebene aufweist, die vorbestimmte Regel aufweist: Vergleichen von Schätzwerten dafür, wann die Kanalressourcen höherer Ebene, denen die Kanalressourcen niederer Ebene in der zweiten Teilmenge zugeordnet sind, zur Zuteilung verfügbar werden, mit dem Schätzwert dafür, wann die spezifische Kanalressource freigegeben wird.

8. Verfahren nach Anspruch 7, wobei gemäß der vorbestimmten Regel, wenn die zweite Teilmenge sowohl eine dritte als auch eine vierte Teilmenge aufweist, wobei die dritte und die vierte Teilmenge jeweils mindestens eine Kanalressource niederer Ebene aufweisen und jede Kanalressource niederer Ebene in der dritten Teilmenge einer Kanalressource höherer Ebene zugeordnet ist, die schätzungsweise gleichzeitig mit oder nach der geschätzten Freigabe der spezifischen Kanalressource verfügbar wird, während jede Kanalressource niederer Ebene in der vierten Teilmenge einer Kanalressource höherer Ebene zugeordnet ist, die schätzungsweise vor der geschätzten Freigabe der spezifischen Kanalressource verfügbar wird,
eine Kanalressource niederer Ebene in der dritten Teilmenge als die spezifische Kanalressource ausgewählt wird.

9. Verfahren nach Anspruch 8, wobei gemäß der vorbestimmten Regel, wenn die dritte Teilmenge mindestens zwei Kanalressourcen niederer Ebene aufweist,
eine Kanalressource niederer Ebene in der dritten Teilmenge, die einer Kanalressource höherer Ebene zugeordnet ist, deren geschätzter Zeitpunkt des Zuteilungsverfügbarwerdens dem geschätzten Zeitpunkt der Freigabe der spezifischen Kanalressource am nächsten liegt, als die spezifische Kanalressource ausgewählt wird.

10. Verfahren nach Anspruch 7, wobei gemäß der vorbestimmten Regel eine Kanalressource niederer Ebene in der zweiten Teilmenge, die einer Kanalressource höherer Ebene zugeordnet ist, deren geschätzter Zeitpunkt des Zuteilungsverfügbarwerdens dem geschätzten Zeitpunkt der Freigabe der spezifischen Kanalressource am nächsten liegt, als die spezifische Kanalressource ausgewählt wird.

11. Vorrichtung (RH1) zur Zuteilung von Kanalressourcen in einem Funkkommunikationssystem, wobei die Vorrichtung umfaßt:
eine elektronische Schaltungsanordnung zum Empfangen einer Anforderung einer Zuteilung einer Kanalressource;
eine elektronische Schaltungsanordnung zum Zuteilen einer ersten Kanalressource gemäß einer vorbestimmten Regel, welche aufweist: Berücksichtigen eines Schätzwerts dafür, wann die erste Kanalressource freigegeben wird, und von Schätzwerten dafür, wann andere vorher zugeteilte Kanalressourcen freigegeben werden.

12. Vorrichtung nach Anspruch 11, wobei das Funkkommunikationssystem ein auf Codemultiplex-Mehrfachzugriff beruhendes System ist und die Kanalressourcen Spreizcodes sind.

13. Vorrichtung nach Anspruch 12, wobei die Spreizcodes orthogonale veränderliche Spreizfaktorcodes (C11-C88) sind.

14. Vorrichtung nach einem der Ansprüche 12 bis 13, wobei die Kanalressourcen mindestens zwei Kanalressourcen höherer Ebene (C41, C42) aufweisen, wobei den Kanalressourcen höherer Ebene jeweils mindestens zwei Kanalressourcen niederer Ebene (C81-C82, C83-C84) so zugeordnet sind, daß eine Kanalressource höherer Ebene (C41) nur zur Zuteilung verfügbar ist, wenn alle Kanalressourcen niederer Ebene (C81-C82), die der Kanalressource höherer Ebene zugeordnet sind, ebenfalls zur Zuteilung verfügbar sind, wobei die Kanalressourcen niederer Ebene höhere Spreizfaktoren als die Kanalressourcen höherer Ebene haben.

15. Vorrichtung nach Anspruch 11, wobei die Kanalressourcen hierarchisch organisiert sind und mindestens zwei Kanalressourcen höherer Ebene aufweisen, wobei den Kanalressourcen höherer Ebene jeweils mindestens zwei Kanalressourcen niederer Ebene so zugeordnet sind, daß eine Kanalressource höherer Ebene nur zur Zuteilung verfügbar ist, wenn alle Kanalressourcen niederer Ebene, die der Kanalressource höherer Ebene zugeordnet sind, ebenfalls zur Zuteilung verfügbar sind.

16. Vorrichtung nach einem der Ansprüche 14 bis 15, wobei gemäß der vorbestimmten Regel,
wenn mindestens zwei Kanalressourcen niederer Ebene verfügbare Kandidaten zur Zuteilung als die spezifische Kanalressource sind
und wenn die verfügbaren Kandidaten sowohl eine erste als auch eine zweite Teilmenge von Kanalressourcen niederer Ebene aufweisen, wobei die erste und die zweite Teilmenge jeweils mindestens eine Kanalressource niederer Ebene aufweisen und jede Kanalressource niederer Ebene in der ersten Teilmenge einer Kanalressource höherer Ebene zugeordnet ist, die gegenwärtig zur Zuteilung verfügbar ist, während jede Kanalressource niederer Ebene in der zweiten Teilmenge einer Kanalressource höherer Ebene zugeordnet ist, die gegenwärtig nicht zur Zuteilung verfügbar ist,
eine Kanalressource niederer Ebene in der zweiten Teilmenge als die spezifische Kanalressource ausgewählt wird.

17. Vorrichtung nach Anspruch 16, wobei gemäß der vorbestimmten Regel, wenn die zweite Teilmenge mindestens zwei Kanalressourcen niederer Ebene aufweist, die vorbestimmte Regel aufweist: Vergleichen von Schätzwerten dafür, wann die Kanalressourcen höherer Ebene, denen die Kanalressourcen niederer Ebene in der zweiten Teilmenge zugeordnet sind, zur Zuteilung verfügbar werden, mit dem Schätzwert dafür, wann die spezifische Kanalressource freigegeben wird.

18. Vorrichtung nach Anspruch 17, wobei gemäß der vorbestimmten Regel, wenn die zweite Teilmenge sowohl eine dritte als auch eine vierte Teilmenge aufweist, wobei die dritte und die vierte Teilmenge jeweils mindestens eine Kanalressource niederer Ebene aufweisen und jede Kanalressource niederer Ebene in der dritten Teilmenge einer Kanalressource höherer Ebene zugeordnet ist, die schätzungsweise gleichzeitig mit oder nach der geschätzten Freigabe der spezifischen Kanalressource verfügbar wird, während jede Kanalressource niederer Ebene in der vierten Teilmenge einer Kanalressource höherer Ebene zugeordnet ist, die schätzungsweise vor der geschätzten Freigabe der spezifischen Kanalressource verfügbar wird,
eine Kanalressource niederer Ebene in der dritten Teilmenge als die spezifische Kanalressource ausgewählt wird.

19. Vorrichtung nach Anspruch 18, wobei gemäß der vorbestimmten Regel, wenn die dritte Teilmenge mindestens zwei Kanalressourcen niederer Ebene aufweist,
eine Kanalressource niederer Ebene in der dritten Teilmenge, die einer Kanalressource höherer Ebene zugeordnet ist, deren geschätzter Zeitpunkt des Zuteilungsverfügbarwerdens dem geschätzten Zeitpunkt der Freigabe der spezifischen Kanalressource am nächsten liegt, als die spezifische Kanalressource ausgewählt wird.

20. Vorrichtung nach Anspruch 17, wobei gemäß der vorbestimmten Regel eine Kanalressource niederer Ebene in der zweiten Teilmenge, die einer Kanalressource höherer Ebene zugeordnet ist, deren geschätzter Zeitpunkt des Zuteilungsverfügbarwerdens dem geschätzten Zeitpunkt der Freigabe der spezifischen Kanalressource am nächsten liegt, als die spezifische Kanalressource ausgewählt wird.

21. Funknetzwerk-Controllerknoten zur Verwendung in einem Funkkommunikationssystem, der eine Vorrichtung nach einem der Ansprüche 11 bis 20 aufweist.

22. Funkzugangsnetzwerk, das eine Vorrichtung nach einem der Ansprüche 11 bis 20 aufweist.

## Revendications

1. Procédé pour allouer des ressources de canal dans un système de communication radio (SYS1), le procédé comprenant:
la réception (301) d'une requête pour une allocation d'une ressource de canal;
l'allocation (302) d'une ressource de canal spécifique (C11-C88) conformément à une règle prédéterminée qui inclut le fait de considérer une estimation du moment où ladite ressource de canal spécifique sera libérée et des estimations du moment où d'autres ressources de canal allouées au préalable seront libérées.

2. Procédé selon la revendication 1, dans lequel ledit système de communication radio est un système basé sur accès multiple par répartition de code et lesdites ressources de canal sont des codes d'étalement.

3. Procédé selon la revendication 2, dans lequel lesdits codes d'étalement sont des codes à facteur d'étalement variable orthogonaux (C11-C88).

4. Procédé selon l'une quelconque des revendications 2-3, dans lequel lesdites ressources de canal incluent au moins deux ressources de canal de niveau supérieur (C41, C42), lesdites ressources de canal de niveau supérieur étant chacune associées à au moins deux ressources de canal de niveau inférieur (C81-C82, C83-C84) de telle sorte qu'une ressource de canal de niveau supérieur (C41) soit disponible pour une allocation seulement lorsque toutes les ressources de canal de niveau inférieur (C81-C82) associées à ladite ressource de canal de niveau supérieur sont également disponibles pour une allocation, lesdites ressources de canal de niveau inférieur présentant des facteurs d'étalement plus élevés que lesdites ressources de canal de niveau supérieur.

5. Procédé selon la revendication 1, dans lequel lesdites ressources de canal sont organisées hiérarchiquement et incluent au moins deux ressources de canal de niveau supérieur, lesdites ressources de canal de niveau supérieur étant chacune associées à au moins deux ressources de canal de niveau inférieur de telle sorte qu'une ressource de canal de niveau supérieur soit disponible pour une allocation seulement lorsque toutes les ressources de canal de niveau inférieur associées à ladite ressource de canal de niveau supérieur sont également disponibles pour une allocation.

6. Procédé selon l'une quelconque des revendications 4-5, dans lequel, conformément à ladite règle prédéterminée,
si au moins deux ressources de canal de niveau inférieur sont des candidats disponibles pour une allocation en tant que dite ressource de canal spécifique,
et si lesdits candidats disponibles incluent à la fois des premier et second sous-jeux de ressources de canal de niveau inférieur, lesdits premier et second sous-jeux incluant chacun au moins une ressource de canal de niveau inférieur, et chaque ressource de canal de niveau inférieur dans ledit premier sous-jeu est associée à une ressource de canal de niveau supérieur qui est présentement disponible pour une allocation tandis que chaque ressource de canal de niveau inférieur dans ledit second sous-jeu est associée à une ressource de canal de niveau supérieur qui est présentement non disponible pour une allocation,
une ressource de canal de niveau inférieur dans ledit second sous-jeu est sélectionnée en tant que dite ressource de canal spécifique.

7. Procédé selon la revendication 6, dans lequel, conformément à ladite règle prédéterminée, si ledit second sous-jeu inclut au moins deux ressources de canal de niveau inférieur, ladite règle prédéterminée inclut la comparaison des estimations du moment où les ressources de canal de niveau supérieur associées aux ressources de canal de niveau inférieur dans ledit second sous-jeu deviendront disponibles pour une allocation avec l'estimation du moment où ladite ressource de canal spécifique sera libérée.

8. Procédé selon la revendication 7, dans lequel, conformément à ladite règle prédéterminée, si ledit second sous-jeu inclut à la fois des troisième et quatrième sous-jeux, lesdits troisième et quatrième sous-jeux incluant chacun au moins une ressource de canal de niveau inférieur, et chaque ressource de canal de niveau inférieur dans ledit troisième sous-jeu est associée à une ressource de canal de niveau supérieur qui est estimée comme devenant disponible en même temps ou après la libération estimée de ladite ressource de canal spécifique tandis que chaque ressource de canal de niveau inférieur dans ledit quatrième sous-jeu est associée à une ressource de canal de niveau supérieur qui est estimée comme devenant disponible avant la libération estimée de ladite ressource de canal spécifique,
une ressource de canal de niveau inférieur dans ledit troisième sous-jeu est sélectionnée en tant que dite ressource de canal spécifique.

9. Procédé selon la revendication 8, dans lequel, conformément à ladite règle prédéterminée, si ledit troisième sous-jeu inclut au moins deux ressources de canal de niveau inférieur,
une ressource de canal de niveau inférieur dans ledit troisième sous-jeu qui est associée à une ressource de canal de niveau supérieur dont le temps estimé pour qu'elle devienne disponible pour une allocation est le plus proche du temps estimé de libération de ladite ressource de canal spécifique est sélectionnée en tant que dite ressource de canal spécifique.

10. Procédé selon la revendication 7, dans lequel, conformément à ladite règle prédéterminée, une ressource de canal de niveau inférieur dans ledit second sous-jeu qui est associée à une ressource de canal de niveau supérieur dont le temps estimé pour qu'elle devienne disponible pour une allocation est le plus proche du temps estimé de libération de ladite ressource de canal spécifique est sélectionnée en tant que dite ressource de canal spécifique.

11. Appareil (RH1) pour allouer des ressources de canal dans un système de communication radio, ledit appareil comprenant:
un circuit électronique pour recevoir une requête pour une allocation d'une ressource de canal;
un circuit électronique pour allouer une première ressource de canal conformément à une règle prédéterminée, laquelle inclut le fait de considérer une estimation du moment où ladite première ressource de canal sera libérée et des estimations du moment où d'autres ressources de canal allouées au préalable seront libérées.

12. Appareil selon la revendication 11, dans lequel ledit système de communication radio est un système basé sur accès multiple par répartition de code et lesdites ressources de canal sont des codes d'étalement.

13. Appareil selon la revendication 12, dans lequel lesdits codes d'étalement sont des codes à facteur d'étalement variable orthogonaux (C11-C88).

14. Appareil selon l'une quelconque des revendications 12-13, dans lequel lesdites ressources de canal incluent au moins deux ressources de canal de niveau supérieur (C41, C42), lesdites ressources de canal de niveau supérieur étant chacune associées à au moins deux ressources de canal de niveau inférieur (C81-C82, C83-C84) de telle sorte qu'une ressource de canal de niveau supérieur (C41) soit disponible pour une allocation seulement lorsque toutes les ressources de canal de niveau inférieur (C81-C82) associées à ladite ressource de canal de niveau supérieur sont également disponibles pour une allocation, lesdites ressources de canal de niveau inférieur présentant des facteurs d'étalement plus élevés que lesdites ressources de canal de niveau supérieur.

15. Appareil selon la revendication 11, dans lequel lesdites ressources de canal sont organisées hiérarchiquement et incluent au moins deux ressources de canal de niveau supérieur, lesdites ressources de canal de niveau supérieur étant chacune associées à au moins deux ressources de canal de niveau inférieur de telle sorte qu'une ressource de canal de niveau supérieur soit disponible pour une allocation seulement lorsque toutes les ressources de canal de niveau inférieur associées à ladite ressource de canal de niveau supérieur sont également disponibles pour une allocation.

16. Appareil selon l'une quelconque des revendications 14-15, dans lequel, conformément à ladite règle prédéterminée,
si au moins deux ressources de canal de niveau inférieur sont des candidats disponibles pour une allocation en tant que dite ressource de canal spécifique,
et si lesdits candidats disponibles incluent à la fois des premier et second sous-jeux de ressources de canal de niveau inférieur, dans lequel lesdits premier et second sous-jeux incluent chacun au moins une ressource de canal de niveau inférieur, et chaque ressource de canal de niveau inférieur dans ledit premier sous-jeu est associée à une ressource de canal de niveau supérieur qui est présentement disponible pour une allocation tandis que chaque ressource de canal de niveau inférieur dans ledit second sous-jeu est associée à une ressource de canal de niveau supérieur qui est présentement non disponible pour une allocation,
une ressource de canal de niveau inférieur dans ledit second sous-jeu est sélectionnée en tant que dite ressource de canal spécifique.

17. Appareil selon la revendication 16, dans lequel, conformément à ladite règle prédéterminée, si ledit second sous-jeu inclut au moins deux ressources de canal de niveau inférieur, ladite règle prédéterminée inclut la comparaison des estimations du moment où les ressources de canal de niveau supérieur associées aux ressources de canal de niveau inférieur dans ledit second sous-jeu deviendront disponibles pour une allocation avec l'estimation du moment où ladite ressource de canal spécifique sera libérée.

18. Appareil selon la revendication 17, dans lequel, conformément à ladite règle prédéterminée, si ledit second sous-jeu inclut à la fois des troisième et quatrième sous-jeux, lesdits troisième et quatrième sous-jeux incluant chacun au moins une ressource de canal de niveau inférieur, et chaque ressource de canal de niveau inférieur dans ledit troisième sous-jeu est associée à une ressource de canal de niveau supérieur qui est estimée comme devenant disponible en même temps ou après la libération estimée de ladite ressource de canal spécifique tandis que chaque ressource de canal de niveau inférieur dans ledit quatrième sous-jeu est associée à une ressource de canal de niveau supérieur qui est estimée comme devenant disponible avant la libération estimée de ladite ressource de canal spécifique,
une ressource de canal de niveau inférieur dans ledit troisième sous-j eu est sélectionnée en tant que dite ressource de canal spécifique.

19. Appareil selon la revendication 18, dans lequel, conformément à ladite règle prédéterminée, si ledit troisième sous jeu inclut au moins deux ressources de canal de niveau inférieur,
une ressource de canal de niveau inférieur dans ledit troisième sous-jeu qui est associée à une ressource de canal de niveau supérieur dont le temps estimé pour qu'elle devienne disponible pour une allocation est le plus proche du temps estimé de libération de ladite ressource de canal spécifique est sélectionnée en tant que dite ressource de canal spécifique.

20. Appareil selon la revendication 17, dans lequel, conformément à ladite règle prédéterminée, une ressource de canal de niveau inférieur dans ledit second sous-jeu qui est associée à une ressource de canal de niveau supérieur dont le temps estimé pour qu'elle devienne disponible pour une allocation est le plus proche du temps estimé de libération de ladite ressource de canal spécifique est sélectionnée en tant que dite ressource de canal spécifique.

21. Noeud de contrôleur de réseau radio pour une utilisation dans un système de communication radio incluant un appareil selon l'une quelconque des revendications 11-20.

22. Réseau d'accès radio incluant un appareil selon l'une quelconque des revendications 11-20.
